# EUROPEAN PATENT APPLICATION

(11) **EP 2 727 455 A2**
(43) Date of publication of application: **07.05.2014**
(21) Application number: 13190602.6
(22) Date of filing: 29.10.2013
(51) Int. Cl.: A01F 15/08, A01F 15/18

(54) **Round baler**

(30) Priority: 30.10.2012 BE 201200743
(71) Applicant: CNH Industrial Belgium nv, 8210 Zedelgem (BE)
(72) Inventor: De Craemer, Barbara, 8200 Sint-Andries (BE)
(74) Representative: CNH Industrial IP Department

(57) **Abstract**

A round baler is described having a housing (11) with two sidewalls (80) and a plurality of belts (20) arranged side by side within the housing (11) between the sidewalls (80) and guided over rolls of which at least some (44,45,48) are mounted movably to permit a baling chamber (18) bounded defined by sections of the belts (20) to increase in diameter as the bale being formed grows in size. The movable rolls are supported by a belt tension arm assembly (60) that comprises radius arms (60b, 60c) extending from an axle (60a) that is rotatable relative to the housing (11) about an axis (62) parallel to that of the rolls (45,45,48). In the invention, the rolls (244,245,248) nearest the sidewalls (80) of the housing are cantilevered mounted on the belt tension arm assembly (260) to extend laterally beyond the radius arms (260b,260c).

## Description

### Field of the invention

The present invention relates to a round baler having a housing with two sidewalls and a plurality of belts arranged side by side within the housing between the sidewalls and guided over rolls of which at least some are mounted movably to permit a cylindrical volume bounded by sections of the belts to increase in diameter as the bale being formed grows in size.

### Background of the invention

Round balers of the type described above are known and an example is to be found in EP 2269440. For convenience, Figures 1 and 2 of the latter patent are reproduced herein as Figures 1 and 2 of the accompanying drawings, in which:
Figure 1 is a side view of a round baler showing a baling chamber configured at the beginning of a baling cycle; and
Figure 2 is a side view of the round baler of Figure 1 in which the baling chamber is configured as it would be near the end of a baling cycle;

Throughout the present specification, any reference to the terms "left" or "right" is used as a matter of mere convenience, and is determined by standing at the rear of the machine facing in its normal direction of travel. Likewise, "forward" and "rearward" are determined by the normal direction of travel. "Upward" and "downward" orientations are relative to the ground or operating surface as are any references to "horizontal" or "vertical" planes. When referring to the figures, like parts have been allocated the same reference numerals.

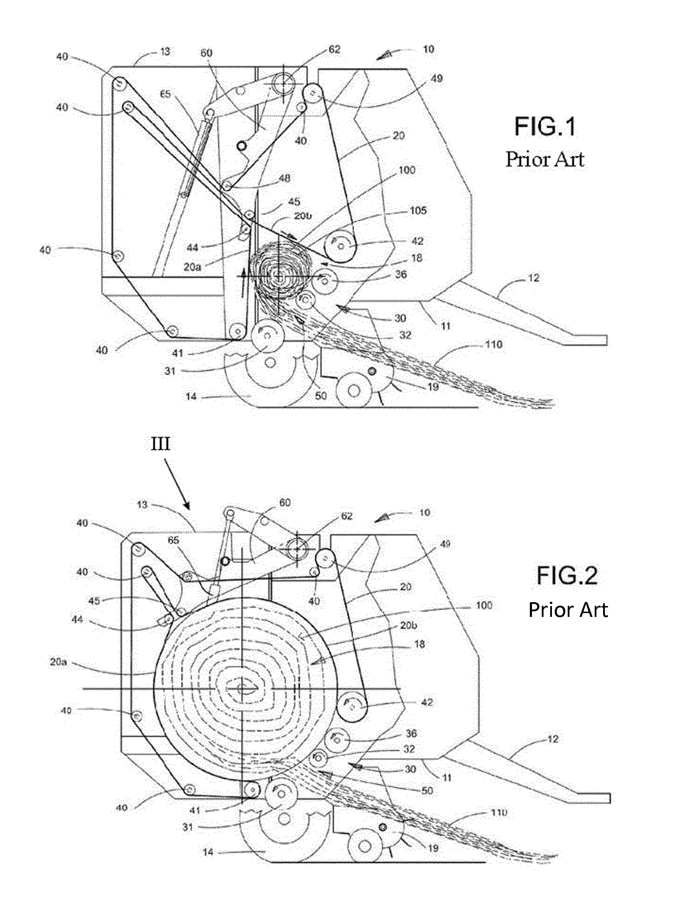

In Figures 1 and 2, a round baler 10 is shown to comprise a housing 11 terminating forwardly in a tongue 12 and rearwardly, slightly beyond a transverse axle to which a pair of wheels 14 (only one shown) are mounted. The housing 11 supports a series of movable belts 20, transversely arranged fixed rolls 30, and belt guide rolls 40 which together with a pair of generally parallel and opposing sidewalls establish an expandable baling chamber 18. The guide rolls may be cylindrical guide surfaces relative to which the belts slip but more preferably they are bearing mounted rollers that rotate with movement of the belts. Cut crop material 110 is picked up by transverse pickup 19 and fed into baling chamber 18 where it is formed into a cylindrically shaped bale 100 by movement of the belts 20 and driven rolls 30. A completed bale 100, that is one that has reached a desired diameter as shown in Figure 2, is then wrapped with twine or a wrapping material to maintain the bale shape after ejection from the baler. Upon completion of the wrapping process, the tailgate 13 pivots upwardly to open the baling chamber 18 towards the rear and the bale 100 is ejected onto the ground.

Fixed rolls 30 defining the baling chamber 18 comprise at least a floor roll 31 and a starter roll 32 which are transversely aligned with respect to the housing. Other fixed rolls (e.g., 36) may be used to further define the lower and forward portions of the bale chamber periphery. Fixed rolls 30 are driven in the direction shown by conventional means (i.e., chains and sprockets or gears) connected to and powered by a tractor power take-off (not shown). Floor roll 31 and starter roll 32 are spaced-apart to form a throat or crop in-feed opening 50 through which crop material enters the baling chamber. The rearward and upper portions of the baling chamber 18 are defined by movable belts 20 (shown as 20a and 20b, respectively) a plurality of side-by-side belts spanning the guide rolls 40 in a manner to create the expandable baling chamber 18. The belts are powered by drive roll 49 to move around the guide rolls 40 in a generally clockwise direction around the baling chamber as shown which, in conjunction with rotation of the fixed rolls 30, causes the incoming crop material to be coiled in a generally clockwise direction to form the bale.

Some of the belt guide rolls 40 are movable and are positioned on a belt tension arm assembly 60, specifically a first guide roll 44 and a second guide roll 45, where they manage movement of the belts 20 as the baling in the chamber expands. First and second guide rolls 44, 45, are positioned closely adjacent to each other, separated by a space sufficient for passage of the belts and to prevent contact between the portions of the belts moving in opposite directions through the space. The positioning of guide rolls 44, 45 is such that a first portion of the belts 20a spans unsupported between lower idler roll 41 and first guide roll 44 and a second portion of the belts 20b spans between second guide roll 45 and forward idler roll 42. When the bale chamber is empty or a bale core is being initially formed, the belts will follow a generally straight path between the rolls defining a chamber having a generally vertical portion of the belts rearwardly in the chamber and a generally horizontal portion of the belts upwardly in the chamber. This creates a core formation chamber with rear and upper boundaries that are generally right-angled relative to each other. As the bale grows, the belts will follow the perimeter contour of the bale in the chamber and the angle between the rear and upper portions will increase to a neartangential relationship when the bale is fully formed.

Belt tension arm assembly 60 is rotatably connected to housing 11 at a pivot axis 62 positioned generally above the baling chamber and slightly forward of the bale roll centreline. Belt tension arm assembly 60 is pivotable between generally first and second positions and is controlled by actuator 65 between those positions to maintain proper belt tension against the expanding crop roll. Belt take-up and tensioning apparatus of this type are well known in the art and not further discussed in detail herein. Examples of take-up apparatus are described in U.S. Patent Nos. 4,870,812 and 5,367,865, both of Jennings et al. The first position corresponds to that shown in Figure 1 in which a bale is beginning to be formed. This first position is also referred to as the bale core formation position. The second position, shown in Figure 2 corresponds to a bale that has reached a desired size and is ready to be ejected from the baler.

As earlier mentioned, Figures 1 and 2 are derived from EP 2269440 to which reference may be made for further details of the round baler and for an explanation of components that have been allocated reference numerals but not described above. The above description should however suffice to provide the necessary background to enable the present invention to be understood.

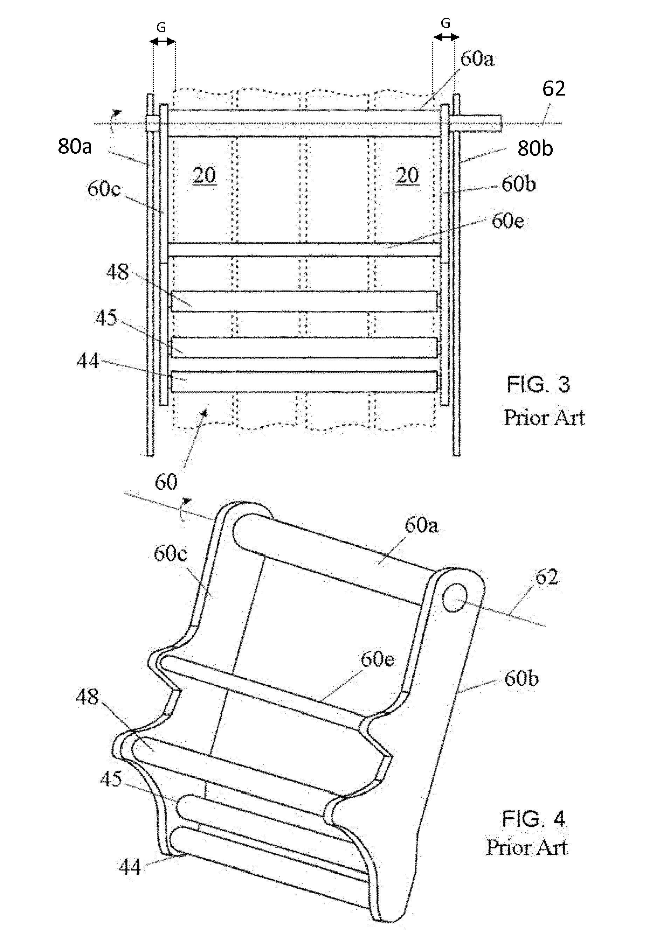

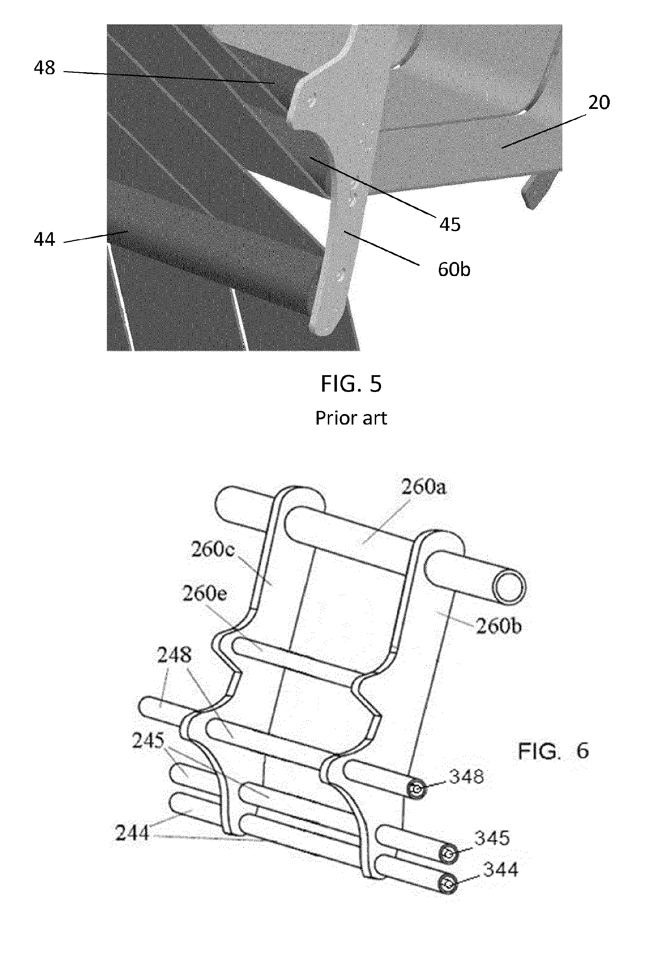

Figure 3 of the accompanying drawings shows the belt tension arm assembly 60 when viewed in the direction of the arrow III in Figure 2, Figure 4 is a perspective view of the tension arm assembly 60 of Figure 3 shown on its own, and Figure 5 is a perspective view of the tension arm assembly 60 of Figure 3 and 4 with the belts placed around the specific guide rolls. The tension arm assembly 60 comprises an axle 60a that is pivotably mounted in the housing for rotation about the axis 62. The assembly further comprises at the two ends of the axle a radius arm 60b, 60c located immediately adjacent the respective sidewall 80a, 80b of the housing. The axles for the guide rolls 44, 45 and 48 over which the belts 20 are guided extend between these two radius arms 60b and 60c. A strut 60e, that acts as a reinforcement and a separator but does not guide the belts 20, connects the two arms 60b and 60c.

The pickup 19 that feeds crop into the baling chamber 18 is wider than that baling chamber 18 and crop is funnelled into the baling chamber 18 from below. Because of this, the crop density tends to be at its highest immediately adjacent the sidewalls of the housing, which are designated 80 in Figure 3. However, because of the design of the belt tension arm assembly in Figure 3, there is necessarily a wide gap, designated G in Figure 3, between the sidewalls 80 and the nearest one of the belts 20, of which the paths are shown in dotted lines in Figure 3. The gap G is wide because it is made up of the width of the radius arm 60b or 60c and the two clearances that are required for the radius arm to avoid colliding with the adjacent sidewall 80 on one side and for it to avoid snagging the belt 20 on the other side. The wide gap results in crop finding its way behind the belts instead of being baled, and a build-up of crop can eventually interfere with the baling operation.

### Summary of the invention

With a view to mitigating the foregoing problem encountered in the prior art, there is provided in accordance with the present invention a round baler having a housing with two sidewalls and a plurality of belts arranged side by side within the housing between the sidewalls and guided over rolls of which at least some are mounted movably to permit a baling chamber bounded by sections of the belts to increase in diameter as the bale being formed grows in size, the movable rolls being supported by a belt tension arm assembly that comprises radius arms extending from an axle that is rotatable relative to the housing about an axis parallel to that of the rolls, characterised in that the movable rolls are cantilevered mounted on the belt tension arm assembly to extend laterally beyond the radius arms.

Because the end guide rolls are cantilever mounted on the belt tension arm assembly, there is no radius arm between the belt and the sidewall of the housing and there is only one small clearance required. In this way, it is possible to reduce the crop that can pass between the belts and the sidewalls.

### Brief description of the drawings

The invention will now be described further, by way of example, with reference to the accompanying drawings, in which:
Figures 1 to 2 are, as previously described, schematic representations of a prior art round baler at different stages in the formation of a bale,
Figures 3, 4 and 5 are, as previously described, plan and perspective view of a known belt tension arm assembly used in the round baler of Figures 1 and 2,
Figure 6 is a similar view to Figures 3 and 4 of a belt tension arm assembly showing a first embodiment of the present invention,

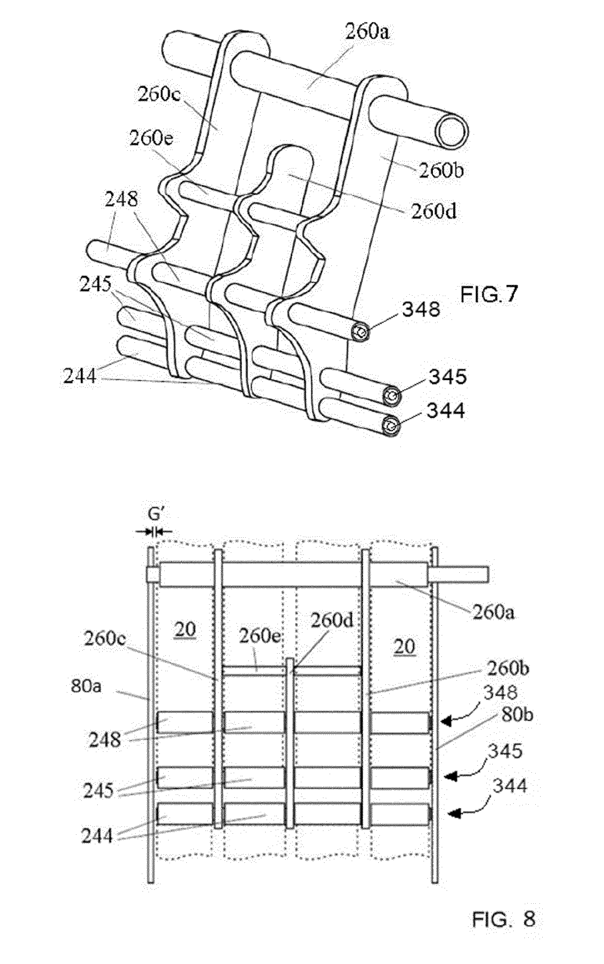

Figures 7 and 8 are similar views to the Figure 6 showing a second embodiment of the present invention, and

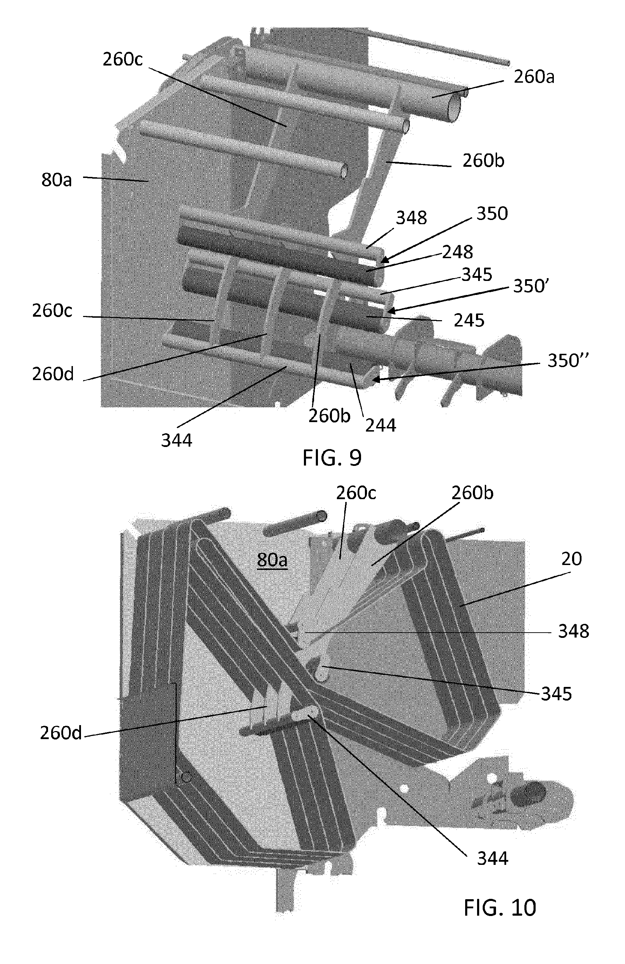

Figures 9 and 10 is again a similar view to the Figure 6 showing a third embodiment of the present invention.

### Detailed description of the preferred embodiment(s)

Referring now to Figure 6, there is shown a modified design of belt tension arm assembly 260 to replace the assembly shown in Figure 1 to 5. To avoid repetition, like components have been allocated like reference numerals but in the 200 series. The important difference to note is that the radius arms 260b and 260c are no longer located adjacent the housing sidewalls 80 and they are not positioned at the axial ends of the axle 260a. Instead, they are spaced from the sidewalls 80 and from the ends of the axle 260a by a distance only slightly greater that the width of the end belt 20. The guide rolls 244, 245 and 248 for the end belts are cantilever mounted on the belt tension arm assembly 260 and extend laterally beyond the radius arms 260b and 260c.

In Figure 7 and 8, a third additional arm 260d is provided midway between the radius arms 260b and 260c. Note that the third arm 260d need not extend as far as the axle 260a. If more than four belts are used, such additional arms may be provided between each of the belts. This has the advantage that the belts are guided between these arms and sideway movement of the belts is prevented. So, alternatively, a fourth arm (not shown) may be provided between radius arms 260b and 260c dividing, together with third arm 260d the available space into 3 like parts. If a fourth arm is used, five belts 20 can be placed in between the sections formed by the arms.
A strengthening strut 260e may also be connect the arms 260b, 260c and 260d but it need not extend laterally beyond the radius arms 260b and 260c.

Figures 9 and 10 show an alternative embodiment having shafts 344, 345 and 348 supporting each of the guide rolls 244, 245 and 248. Each shaft 344, 345 and 348 has side brackets or roll holders 350, 350' and 350" on opposite sides to rotatably connect the respective guide roll to the shaft. Each shaft is connected to arms 260b and 260c. In the embodiment shown in Figures 9 and 10, the shafts 344, 345 and 348 are also connected to the third arm 260d. As shown in Figure 10, the guide rolls are now pushing against the belts 20, while the arms 260b, 260c and 260d make sure that the belts are correctly positioned in between the arms. Alternatively, a single shaft may be used for all the belts and roll holders that do no interfere with the belts may be used to retain the individual rolls on the common shaft.

Each embodiment offers the advantage that the gap G' present between the belts 20 and the housing sidewalls 80 (see Figure 5) is very much reduced in size, thereby avoiding loss of crop from the baling chamber.

A further advantage of the modified design is that the arms 260b, 260c themselves now act as belt separators maintaining a spacing between the first and second belts and also between the last and penultimate belts. This reduces the need for separate belt separators.

## Claims

1. A round baler having a housing (11) with two sidewalls (80a, 80b) and a plurality of belts (20) arranged side by side within the housing (11) between the sidewalls (80a, 80b) and guided over rolls (244, 245, 248) of which at least some are mounted movably to permit a baling chamber (18) bounded defined by sections of the belts (20) to increase in diameter as the bale being formed grows in size, the movable rolls being supported by a belt tension arm assembly (260) that comprises radius arms (260b, 260c) extending from an axle (260a) that is rotatable relative to the housing (11) about an axis (62) parallel to that of the rolls (244,245,248), **characterised in that** the movable rolls (244,245,248) are cantilevered mounted on the belt tension arm assembly (260) to extend laterally beyond the radius arms (260b,260c)

2. A round baler as claimed in claim 1, wherein at least one of the movable rolls (244; 245; 248) comprises a plurality of movable rollers rotatably mounted on a common shaft (344; 345; 348) connected to the radius arms (260b, 260c), and roll holders (350; 350'; 350") are provided for retaining the rolls on the common shaft.

3. A round baler as claimed in claim 2, wherein the common shaft is connected to at least one further arm (260d) serving as a strengthening element and as a belt separator.

4. A round baler as claimed in claim 3, wherein the further arm (260d) is not connected to the axle (260a) of the belt tension arm assembly.

5. A round baler as claimed in any of the preceding claims, wherein at least one of the movable rolls (244, 245, 248) is connected to at least one shaft (344, 345, 348), the at least one shaft being connected to the radius arms (260b, 260c) such that the movable rolls (244, 245, 248) are in direct contact with the belts (20) while the at least one shaft will not interfere with the belts during the baling cycle.

6. A round baler as claimed in claim 5, wherein the at least one shaft (344, 345, 348) has a bracket (350, 350', 350") for holding the at least one movable roll (244, 245, 248).

7. A round baler as claimed in any of the preceding claims 1 to 4, wherein the movable rolls (244, 245, 248) are connected to a common shaft.

8. A round baler as claimed in claim 7, wherein a bracket (350, 350', 350") connects the respective movable roll (244, 245, 248) with the common shaft.
